(19) Europäisches Patentamt
European Patent Office
Office européen des brevets

(11) Veröffentlichungsnummer: **0 001 809**
**B1**

(12) # EUROPÄISCHE PATENTSCHRIFT

(45) Veröffentlichungstag der Patentschrift: **03.02.82**

(21) Anmeldenummer: **78101237.2**

(22) Anmeldetag: **27.10.78**

(51) Int. Cl.³: **A 01 N 43/50,**
A 01 N 53/00,
A 01 N 37/10,
C 07 D 233/54,
C 07 C 69/743,
C 07 C 69/608

(54) **Synergetische insektizide und akarizide Mischungen.**

(30) Priorität: **09.11.77 DE 2750030**

(43) Veröffentlichungstag der Anmeldung:
**16.05.79 Patentblatt 79/10**

(45) Bekanntmachung des Hinweises auf die Patenterteilung:
**03.02.82 Patentblatt 82/5**

(84) Benannte Vertragsstaaten:
**BE CH DE FR GB NL SE**

(56) Entgegenhaltungen:
**DE - A - 2 738 907**
**FR - A - 1 486 817**
**FR - A - 2 185 612**
**FR - A - 2 241 533**
**US - A - 2 955 071**

(73) Patentinhaber: **BASF Aktiengesellschaft**
**Carl-Bosch-Strasse 38**
**D-6700 Ludwigshafen (DE)**

(72) Erfinder: **Goetz, Norbert, Dr.**
**Schoefferstrasse 25**
**D-6520 Worms (DE)**
Erfinder: **Steimmig, Anna, Dr.**
**Freinsheimer Strasse 9**
**D-6700 Ludwigshafen (DE)**
Erfinder: **Zeeh, Bernd, Dr.**
**Thorwaldsenstrasse 5**
**D-6700 Ludwigshafen (DE)**
Erfinder: **Adolphi, Heinrich, Dr.**
**Katmitweg 11**
**D-6703 Limburgerhof (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 001 809 B1

Synergetische insektizide und akarizide Mischungen

Die Erfindung betrifft synergetische insektizide und akarizide Mittel, die als Folgeprodukte der Pyrethrine bekannt gewordene Wirkstoffe und zur Steigerung der Wirksamkeit dieser Wirkstoffe Imidazolderivate enthalten.

Es ist bekannt, daß die erforderliche Aufwandmenge bei der Anwendung von Insektiziden durch Zusätze von nicht oder nur wenig insektizid wirksamen Verbindungen, sogenannten Synergisten, reduziert werden kann. Insektizide Mittel, die Pyrethrine oder Pyrethroide in Kombination mit insektizid unwirksamen Imidazolderivaten als Synergisten enthalten, sind in der GB - A - 1 148 103 beschrieben, wobei die synergistische Wirkungssteigerung der Imidazolderivate allerdings nur für Pyrethrumextrakte und Allethrin offenbart ist.

Außerdem ist aus der DE - A - 23 26 077 und der DE - A - 23 35 347 bekannt, daß die insektizide und akarizide Wirkung von Pyrethroiden durch Kombination mit bekannten Synergisten, z.B. Piperonylbutoxid, gesteigert werden kann. Der mit diesem Synergisten erzielte Potenzierungsfaktor ist allerdings niedrig.

Es wurde gefunden, daß insektizide und akarizide Mittel, die mindestens ein Imidazolderivat der Formel

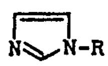 I,

in der R einen unverzweigten oder verzweigten Alkylrest mit 6 bis 14 Kohlenstoffatomen oder den Allylrest bedeutet, und mindestens eine Verbindung der Formel

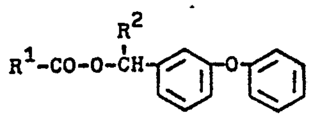 II,

in der

$R^1$ einen 2,2-Dimethyl-3-(2,2-dihalogenvinyl)-cyclopropylrest oder den Rest

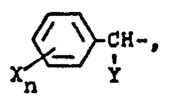

wobei X für Halogen,

n für 0, 1, 2 oder 3 und Y für Alkyl mit 1 bis 3 Kohlenstoffatomen stehen und

$R^2$ Wasserstoff oder eine Cyangruppe bedeuten, enthalten, eine erheblich größere insektizide und akarizide Wirksamkeit haben als Mittel, die die Einzelkomponenten enthalten.

Eine Wirkungssteigerung durch Synergisten gelingt im allgemeinen besonders bei Stoffen mit mäßiger Aktivität. Es war deshalb sehr überraschend, daß eine Stoffklasse gefunden wurde, die auch auf die neuen, hochwirksamen Folgeprodukte der Pyrethrine eine erhebliche Synergistenwirkung ausübt. Durch Ersatz des bekannten Synergisten Piperonylbutoxid in den aus der DE - A - 23 26 077 und der DE - A - 23 35 347 bekannten insektiziden Mitteln durch die aus der GB - A - 1 148 103 bekannten Imidazolderivate wird ein erheblich höherer Potenzierungsfaktor erreicht.

Als synergistisch wirkende Imidazolderivate der Formel I kommen Imidazole in Betracht, die in 1-Stellung einen unverzweigten oder verzweigten Alkylrest mit 6 bis 14 Kohlenstoffatomen oder den Allylrest tragen. Beispiele für R sind Hexyl-, Heptyl-, Octyl-, Nonyl-, Decyl-, Dodecyl-, Tridecyl- und Tetradecylreste. Besonders bevorzugte Synergisten sind Verbindungen der Formel I, bei denen R für Dodecylreste und Tridecylreste, insbesondere n-Dodecyl und 1,5,9-Trimethyldecyl, steht. Die Verbindung 1-(1,5,9-Trimethyl-decyl)-imidazol ist neu.

Beispielsweise sind folgende Imidazolderivate als Synergisten für die Folgeprodukte der Pyrethrine geeignet:

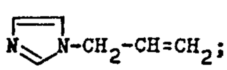 ; $Kp_{12}$ = 99°C

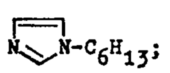 ; $Kp_{18}$ = 145°C

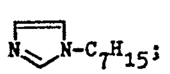 ; $Kp_{14}$ = 148°C

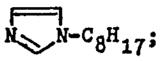 $Kp_{11}$ = 160°C

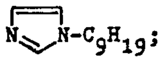 $Kp_{12}$ = 175°C

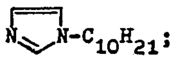 $Kp_{2}$ = 135°C

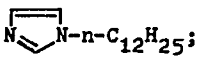 $Kp_{1}$ = 149—152°C

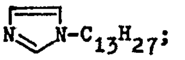 $Kp_{4}$ = 170°C

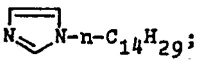 $Kp_{1}$ = 164°C

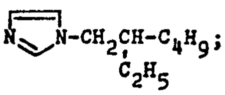 $Kp_{12}$ = 150°C

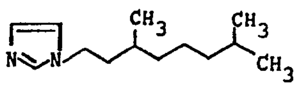 $Kp_{0.01}$ = 118°C

Die Imidazolderivate der Formel I sind zum Teil aus der GB - A - 1 148 103 bekannt; sie können nach an sich bekannten Verfahren hergestellt werden. Das folgende Beispiel erläutert ihre Herstellung.

*Herstellung von 1-(1,5,9-Trimethyl-decyl)-imidazol*

52,6 Gewichtsteile 6,10-Dimethyl-undec-2-yl-bromid und 27,2 Gewichtsteile Imidazol werden in 80 Gewichtsteilen Tetrahydrofuran gelöst, in einen 250 ml Autoklaven gefüllt und 15 Stunden lang auf 160°C erhitzt. Das Reaktionsprodukt wird anschließend filtriert und aus dem Filtrat bei Normaldruck das Lösungsmittel entfernt. Die Destillation des hierbei erhaltenen Rückstandes unter Vakuum ergibt 41,5 Gewichtsteile (Ausbeute: 83% der Theorie) 1-(1,5,9-Trimethyl-decyl)-imidazol; $Kp_4$ = 185°C.

Geeignete Wirkstoffe sind beispielsweise Verbindungen der Formel II, bei denen $R^1$ für einen 2,2-Dimethyl-3-(2,2-dihalogenvinyl)-cyclopropylrest, insbesondere einen 2,2-Dimethyl-3-(2,2-dichlorvinyl)-cyclopropyl- oder einen 2,2-Dimethyl-3-(2,2-dibromvinyl)-cyclopropylrest oder einen substituierten Benzylrest der Formel

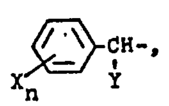

steht, in der X Halogen, vorzugsweise Chlor, Y Alkyl mit 1 bis 3 Kohlenstoffatomen, vorzugsweise Isopropyl, und n 0, 1, 2 oder 3, vorzugsweise 1, bedeuten. Dabei stehen $R^2$ für Wasserstoff oder Cyan.

Beispiele für diese Wirkstoffe sind 3-Phenoxybenzyl(±)-cis, trans-2,2-Dimethyl-3-(2,2-dichlorvinyl)-cyclopropan-1-carboxylat (Permethrin), α-Cyano-3-phenoxybenzyl(±)-cis, trans-2,2-dimethyl-3-(2,2-dichlorvinyl)-cyclopropancarboxylat, (s)-α-Cyano-3-phenoxybenzyl-cis(1R, 3R)-2,2-dimethyl-3-(2,2-dibromvinyl)-cyclopropancarboxylat (Decamethrin), α-Cyano-3-phenoxybenzyl-α-isopropyl-4-chlorphenyl-acetate (Fenvalerate). Diese Wirkstoffe sind bekannt (DE - A - 23 35 347; DE - A - 23 26 077).

Imidazolderivate und Wirkstoffe der Formel II können in den erfindungsgemäßen Mitteln in einem verhältnismäßig breiten Mengenverhältnis eingesetzt werden. In den seltensten Fällen dürfte aber ein Gewichtsverhältnis, das über den Bereich 1:10 bis 10:1 hinausgeht, sinnvoll sein. Bevorzugt ist ein Gewichtsverhältnis im Bereich von 1:5 bis 5:1.

Die erfindungsgemäßen insektiziden und akariziden Mittel können gegenüber einer Vielzahl von Pflanzen- und Haushaltsschädlingen angewendet werden. Sie können als solche, in Form ihrer Formulierungen oder den daraus bereiteten Anwendungsformen, beispielsweise in Form von direkt versprühbaren Lösungen, Pulvern, Suspensionen oder Dispersionen, Emulsionen, Öldispersionen, Pasten, Stäubemittel, Streumitteln, Granulaten durch Versprühen, Vernebeln, Verstäuben, Verstreuen oder Gießen angewendet werden. Die Anwendungsformen richten sich nach den Verwendungzwecken. Imidazolderivat und Wirkstoff bzw. ihre Formulierungen können dabei sowohl gemeinsam als auch getrennt ausgebracht werden.

Die Formulierungen enthalten im allgemeinen zwischen 0,1 und 95 Gew.% Synergist und Wirkstoff, vorzugsweise zwischen 0,5 und 90 Gew.%.

Die Konzentrationen von Synergist und Wirkstoff in den anwendungsfertigen Zubereitungen können in größeren Bereichen variiert werden. Im allgemeinen liegen sie zwischen 0,0001 und 10%, vorzugsweise zwischen 0,01 und 1%.

Synergist und Wirkstoff können auch mit gutem Erfolg im Ultra-Low-Volume-Verfahren (ULV) verwendet werden, wobei es möglich ist, Formulierungen mit einer Konzentration an Synergist und Wirkstoff von über 95 Gew.% oder sogar eine Mischung aus Synergist und Wirkstoff ohne Zusätze auszubringen.

Zur Herstellung von direkt versprühbaren Lösungen, Emulsionen, Pasten und Öldispersionen kommen Mineralölfraktionen von mittlerem bis hohem Siedepunkt, wie Kerosin oder Dieselöl, ferner Kohlenteeröle, sowie Öle pflanzlichen oder tierischen Ursprungs, aliphatische, cyclische und aromatische Kohlenwasserstoffe, z.B. Benzol, Toluol, Xylol, Paraffin, Tetrahydronaphthalin, alkylierte Naphthaline oder deren Derivate, z.B. Methanol, Äthanol, Propanol, Butanol, Chloroform, Tetrachlorkohlenstoff, Cyclohexanol, Cyclohexanon, Chlorbenzol, Isophoron, stark polare Lösungsmittel, z.B. Dimethylformamid, Dimethylsulfoxid, N-Methylpyrrolidon, Wasser, in Betracht.

Wäßrige Anwendungsformen können aus Emulsionskonzentraten, Pasten oder netzbaren Pulvern, (Spritzpulvern, Öldispersionen) durch Zusatz von Wasser bereitet werden. Zur Herstellung von Emulsionen, Pasten oder Öldispersionen können die Substanzen als solche oder in einem Öl oder Lösungsmittel gelöst, mittels Netz-, Haft-, Dispergier- oder Emulgiermittel in Wasser homogenisiert werden. Es können aber auch aus wirksamer Substanz sowie Netz-, Haft-, Dispergier- oder Emulgiermittel und eventuell Lösungsmittel oder Öl bestehende Konzentrate hergestellt werden, die zur Verdünnung mit Wasser geeignet sind.

An oberflächenaktiven Stoffen sind zu nennen:

Alkali-, Erdalkali-, Ammoniumsalze von Ligninsulfonsäure, Naphthalinsulfonsäure, Phenolsulfonsaüren, Alkylarylsulfonate, Alkylsulfate, Alkylsulfonate, Alkali- und Erdalkalisalze der Dibutylnaphthanlinsulfonsäure, Lauryläthersulfat, Fettalkoholsulfate, fettsaure Alkali- und Erdalkalisalze, Salze sulfatierter Hexadecanole, Heptadecanole, Octadecanole, Salze von sulfatiertem Fettalkoholglykoläther, Kondensationsprodukte von sulfoniertem Naphthalin und Naphthalinderivaten mit Formaldehyd, Kondensationsprodukte des Naphthalins bzw. der Naphthalinsulfonsäuren mit Phenol und Formaldehyd, Polyoxyäthylenoctylphenoläther, äthoxyliertes Isooctylphenol, Octylphenol, Nonylphenol, Alkylphenolpolyglykoläther, Tributylphenylpolyglykoläther, Alkylarylpolyätheralkohole, Isotridecylalkohol, Fettalkoholäthylenoxid-Kondensate, äthoxyliertes Rizinusöl, Polyoxyäthylenalkyläther, äthoxyliertes Polyoxypropylen, Laurylalkoholpolyglykolätheracetal, Sorbitester, Lignin, Sulfitablaugen und Methylcellulose.

Pulver-, Streu- und Stäubemittel können durch Mischen oder gemeinsames Vermahlen der wirksamen Substanzen mit einem festen Trägerstoff hergestellt werden.

Granulate, z.B. Umhüllungs-, Imprägnierungs- und Homogengranulate, können durch Bindung der Wirkstoffe an feste Trägerstoffe hergestellt werden. Feste Trägerstoffe sind z.B. Mineralerden, wie Silicagel, Kieselsäuren, Kieselgele, Silikate, Talkum, Kaolin, Attaclay, Kalkstein, Kalk, Kreide, Bolus, Löß, Ton, Dolomit, Diatomeenerde, Calcium- und Magnesiumsulfat, Magnesiumoxid, gemahlene Kunststoffe, Düngemittel, wie z.B. Ammoniumsulfat, Ammoniumphosphat, Ammoniumnitrat, Harnstoffe und pflanzliche Produkte, wie Getreidemehle, Baumrinden-, Holz- und Nußschalenmehl, Cellulosepulver und andere feste Trägerstoffe.

Zu den erfindungsgemäßen Mitteln können Öle verschiedenen Typs, Herbizide, Fungizide, andere Insektizide, Bakterizide, gegebenenfalls auch erst unmittelbar vor der Anwendung (Tankmix), zugesetzt werden. Diese Mittel können zu den erfindungsgemäßen Mitteln im Gewichtsverhältnis 1:10 bis 10:1 zugemischt werden.

Die Verwendung der erfindungsgemäßen insektiziden und akariziden Mittel erleichtert die Bekämpfung von Pflanzen- und Haushaltsschädlingen. Dazu gehören Insekten und Milben, die mit Wirkstoffen der Formel II, allerdings bei höheren Konzentrationen, bekömpft werden können. Beispiele dafür sind schädliche Insekten aus der Ordnung der Schmetterlinge (Lepidoptera), beispielsweise Plutella maculipennis (Kohlschabe), Leucoptera coffeella (Kaffeemotte), Hyponomeuta malinellus (Apfelbaumgespinstmotte), Argyresthia conjugella (Apfelmotte), Sitotroga cerealella (Getreidemotte), Phthorimaea operculella (Kartoffelmotte), Capua reticulana (Apfelschalenwickler), Sparganothis pilleriana (Springwurm), Cocoecia murinana (Tannentriebwickler), Tortrix viridana (Eichenwickler), Cylsia ambiguella (Heu- und Sauerwurm), Evetria buoliana (Kieferntriebwickler), Polychrosis botrana (Bekreuzter Traubenwickler), Cydia pomonella (Obstmade), Laspeyresia molesta (Pfirsichtriebbohrer), Laspeyresia funebrana (Pflaumenwickler), Ostrinia nubilalis (Maiszünsler), Loxostege sticticalis (Rübenzünsler), Ephestia kuehniella (Mehlmotte), Chilo suppressalis (Reisstengelbohrer), Galleria Melonella (Wachsmotte), Malacosoma neustria (Ringelspinner), Dendrolimus pini (Kiefernspinner), Thaumatopoea pityocampa (Pinienprozessionsspinner), Phalera bucephala (Mondfleck), Cheimatobia brumata (Kleiner Frostspanner), Hibernia defoliaria (Großer Frostspanner), Bupalus piniarus (Kiefernspanner), Hyphantria cunea (Weißer Bärenspinner), Agrotis segetum (Wintersaateule), Agrotis ypsilon (Ypsiloneule), Barathra

brassicae (Kohleule), Cirphis unipuncta (Heerwurm), Prodenia litura (Baumwollraupe), Laphygma exigua (Ruben-Heerwurm), Panolis flammea (Forleule), Earias insulana (Baumwollkapselwurm), Plusia gamma (Gammaeule), Alabama argillacea (Baumwollblattwurm), Lymantria dispar (Schwammspinner), Lymantria monacha (Nonne), Pieris brassicae (Kohlweißling), Aporia crataegi (Baumweißling);

aus der Ordnung der Käfer (Coleoptera), beispielsweise Blitophaga undata (Schwarzer Rübenaaskäfer), melanotus communis (Drahtwurm), Limonius californicus (Drahtwurm), Agriotes lineatus (Saatschnellkäfer), Agricotes obscurus (Humusschnellkäfer), Agrilus sinuatus (Birnbaum-Prachtkäfer), Meligethese aeneus (Rapsglanzkäfer), Atomaria linearis (Moosknopfkäfer), Epilachna varicestris (Mexikanischer Bohnenkäfer), Phyllopertha horticola (Junikäfer), Popillia japonica (Japankäfer), Melolontha melolontha (Feldmaikäfer), Melolontha hippocastani (Waldmaikäfer), Amphimallus solstitialis (Brachkäfer), Crioceris asparagi (Spargelhähnchen), Lema melanopus (Getreidehähnchen), Leptinotarsa decemlineata (Kartoffelkäfer), Phaedon cochleariae (Meerrettich-Blattkäfer), Phyllotretra nemorum (Kohlerdfloh), Chaetocnema tibialis (Rübenflohkäfer), Phylloides chrysocephala (Raps-Flohkäfer), Diabrotica 12-punctata (Südlicher Maiswurzelwurm), Cassida nebulosa (Nebliger Schildkäfer), Bruchus lentis (Linsenkäfer), Bruchus rufimanus (Pferdebohnenkäfer), Bruchus pisorum (Erbsenkäfer), Sitona lineatus (Linierter Blattrandkäfer), Otiorrhynchus sulcatus (Gefurchter Lappenrüßler), Otiorrhynchus ovatus (Erdbeerwurzelrüßler), Hylobies abietis (Großer Brauner Rüsselkäfer), Byctiscus betulae (Rebenstecher), Anthonomus pomorum (Apfelblütenstecher), Anthonomus grandis (Kapselkäfer), Ceuthorrhynchus assimilis (Kohlschotenrüßler), Ceuthorrhynchus napi (Großer Kohltriebrüßler), Sitophilus granaria (Kornkäfer), Anisandrus dispar (Ungleicher Holzborkenkäfer), Ips typographus (Buchdrucker), Blastophagus piniperda (Gefruchter Wandgärtner);

aus der Ordnung der Schaben, beispielsweise Blatte germanica (Deutsche Schabe), Blatta orientalis (Orientalische Schabe), Periplaneta americana (Amerikanische Schabe);

aus der Ordnung der Zweiflügler (Diptera), beispielsweise Mayetiola destructor (Hessenfliege), Dasyneura brassicae (Kohlschoten-Gallmücke), Contarinia tritici (Gelbe Weizen-Gallmücke), Haplodiplosis equestris (Sattelmücke), Tipula paladosa (Wiesenschnake), Tipula oleracea (Kohlschnake), Dacus cucurbitae (Melonenfliege), Dacus oleae (Olivenfliege), Ceratitis capitata (Mittelmeer-Fruchtfliege), Rhagoletis cerasi (Kirschfruchtfliege), Rhagoletis pomonella (Apfelmade), Anastrepha ludens (Mexikanische Fruchtfliege), Oscinella frit (Fritfliege), Phorbia coarctata (Brachfliege), Phorbia antiqua (Zweibelfliege), Phorbia brassicae (Kleine Kohlfliege), Pegomya hyoscyami (Rübenfliege);

aus der Ordnung der hautflügler (Hymenoptera), beispielsweise Athalia rosae (Rübsenblattwespe), Hoplocampa minuta (Pflaumensägewespe), Monomorium pharaonis (Pharaoameise), Solenopsis geminata (Feuerameise), atta sexdens (Blattschneiderameise);

aus der Ordnung der Wanzen (Heteroptera), beispielsweise Nezara viridula (Grüne Reiswanze), Eurygaster integriceps (Asiatische Getreidewanze), Blissus leucopterus (Chinch bug.), Dysdercus cingulatus (Kapok-Wanze), Dysdercus intermedius (Baumwollwanze), Piesma quadrata (Rübenwanze), Lygus pratensis (Gemeine Wisenwanze);

aus der Ordnung der Pflanzensauger (Homoptera), beispielsweise Perkinsiella saccharicida (Zuckerrohrzikade), Nilaparvata lugens (Braune Zikade), Empoasca fabae (Kartoffelzikade), Psylla mali (Apfelblattsauger), Psylla piri (Birnblattsauger), Trialeurodes vaporariorum (Weiße Fliege), Aphis fabae (Schwarze Bohnenlaus), Aphis pomi (Grüne Apfellaus), Aphis sambuci (Holunderblattlaus), Aphidula nastrutii (Kreuzdornblattlaus), Cerosipha gossypii (Gurkenblattlaus), Sappaphis mali (Rosige Apfellaus), Sappaphis mala (Mehlige Birnblattlaus), Dysphis radicola (Mehlige Apfelfalterlaus), Brachycaudus cardui (Große Pflaumenblattlaus), Brevicoryne brassicae (Kohlblattlaus), Phorodon humuli (Hopfenblattlaus), Rhopalomyzus ascalonicus (Zweibellaus), Myzodes persicae (Grüne Pfirsichlaus), Myzus cerasi (Schwarze Sauerkirschenlaus), Dysaulacorthum pseudosolani (Gefleckte Kartoffelaus), Acyrthosiphon onobrychis (Grüne Erbsenlaus), Macrosiphon rasae (Große Rosenblattlaus), Megoura viciae (Wickenlaus);

und die zu der Klasse der Arachnoidea gehörenden Milben und Zecken (Acarina), beispielsweise Tetranychus urticae, Tetranychus atlanticus, Tetraychus pacificus, Paratetranychus pilosus, Bryobia praetiosa, Ixodes ricinus (Holzbock), Ornithodorus moubata, Ablyomma americanum, Dermacentor silvarum, Boophilus microplus.

Die folgenden Beispiele belegen die biologische Wirkung der erfindungsgemäßen Mittel. Die Versuche wurden mit 1-n-Dodecylimidazol (I) und 1-(1,5,9-Trimethyldecyl)-imidazol (II) durchgeführt. Als Vergleichsmittel V diente der bekannte Synergist 3,5-Methylenoxy-6-n-propyl-benzyl-n-butyl-diäthylenglykoläther (US—PS 2 550 737).

Beispiel 1

Synergistenwirkung bei Schaben (Blatta orientalis)

Der Boden eines 1 1-Glases wird mit der acetonischen Lösung des insektiziden Wirkstoffs und des Synergisten in den in der Tabelle angegebenen Mengenverhältnissen behandelt. Nach Verdunsten des Lösungsmittels belegt man jedes Glas mit 5 ausgewachsenen Schaben (Blatta orientalis) und ermittelt nach 48 Stunden die Mortalitätsrate.

Die Aufwandmenge der Wirkstoffe liegt in logarithmischer Stufung und erlaubt die Berechnung einer LD 50.

| Wirkstoff | Gewichtsverhältnis Wirkstoff:Synergist | LD 50 (mg/Glas) |
|---|---|---|
| I | | >2 |
| II | | >2 |
| Permethrin | | 0,045 |
| Permethrin + I | 1 : 5 | 0,018 + 0,09 |
| Permethrin + II | 1 : 1 | 0,021 + 0,021 |
| Permethrin + II | 1 : 5 | 0,014 + 0,07 |
| Permethrin + V | 1 : 5 | 0,023 + 0,115 |
| Decamethrin | | 0,0035 |
| Decamethrin + I | 1 : 1 | 0,0018 + 0,0018 |
| Fenvalerate | | 0,012 |
| Fenvalerate + I | 1 : 1 | 0,003 + 0,003 |
| Fenvalerate + I | 1 : 5 | 0,0025 + 0,0125 |
| Fenvalerate + II | 1 : 1 | 0,0052 + 0,0052 |
| Fenvalerate + II | 1 : 5 | 0,0035 + 0,0175 |

Beispiel 2

Synergistenwirkung bei Stubenfliegen (Musca domestica); Applikations-Test

4 Tage alte Stubenfliegen (Musca domestica) erhalten in leichter $CO_2$-Narkose je 1 $\mu$l der acetonischen Wirkstofflösung bzw. des Insektizid-Synergist-Gemisches auf das ventrale Abdomen appliziert.

20 Fliegen mit gleicher Behandlung bringt man in einen Folienbeutel (500 ml) und registriert nach 4 Stunden die Mortalität.

Aus den unterschiedlichen Konzentrationen erstellt man die Dosis-Mortalitätskurve und ermittelt die LD 50.

| Wirkstoff | Gewichtsverhältnis Wirkstoff:Synergist | LD 50 ($\mu$g/Fliege) |
|---|---|---|
| I | | >1 |
| II | | >1 |
| Permethrin | | 0,006 |
| Permethrin + I | 1 : 5 | 0,023 + 0,0115 |
| Permethrin + II | 1 : 5 | 0,00316 + 0,0158 |
| Permethrin + V | 1 : 5 | 0,0043 + 0,0215 |
| Fenvalerate | | 0,0051 |
| Fenvalerate + I | 1 : 5 | 0,0027 + 0,0135 |
| Fenvalerate + V | 1 : 5 | 0,0057 + 0,0285 |

Beispiel 3

Synergistenwirkung bei Raupen von Prodenia litura

Junge Maisblätter werden 3 Sekunden lang in die wäßrige Aufbereitung der Wirkstoffe getaucht und nach kurzem Trocknen in Petrischalen gelegt. In jede Schale setzt man 5 Raupen von Prodenia litura im 4. Larvenstadium. Nach 48 Stunden stellt man die Mortalitätsrate fest und errechnet die LC 50.

| Wirkstoff | Gewichtsverhältnis Wirkstoff:Synergist | LC 50 (Gew. %) |
|---|---|---|
| I | | >0,1 |
| Permethrin | | 0,00052 |
| Permethrin + I | 1 : 5 | 0,00025 + 0,00125 |
| Fenvalerate | | 0,0005 |
| Fenvalerate + I | 1 : 5 | 0,00032 + 0,0016 |

**Patentansprüche**

1. Insektizides und akarizides Mittel, gekennzeichnet durch einen Gehalt an mindestens einem Imidazolderivat der Formel

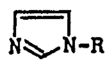

I,

in der R einen unverzweigten oder verzweigten Alkylrest mit 6 bis 14 Kohlenstoffatomen oder den Allylrest bedeutet, und mindestens einer Verbindung der Formel

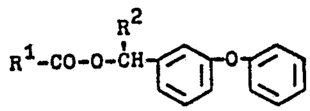

II,

in der
$R^1$ einen 2,2-Dimethyl-3-(2,2-dihalogenvinyl)-cyclopropylrest oder den Rest

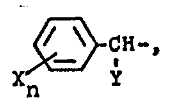

wobei X für Halogen n für 0, 1, 2 oder 3 und Y für Alkyl mit 1 bis 3 Kohlenstoffatomen stehen und $R^2$ Wasserstoff oder eine Cyangruppe bedeuten.

2. Insektizides und akarizides Mittel nach Anspruch 1, dadurch gekennzeichnet, daß das Gewichtsverhältnis der Verbindungen der Formel I und II zueinander 1:10 bis 10:1 beträgt.

3. Insektizides und akarizides Mittel nach Anspruch 1, dadurch gekennzeichnet, daß es als Imidazolderivat der Formel I 1-n-Dodecyl-imidazol enthält.

4. Insektizides und akarizides Mittel nach Anspruch 1, dadurch gekennzeichnet, daß es als Imidazolderivat der Formel I 1-(1,5,9-Trimethyldecyl)-imidazol enthält.

5. Insektizides und akarizides Mittel nach Anspruch 1, dadurch gekennzeichnet, daß es als Verbindung der Formel II 3-Phenoxy-benzyl-(±)-cis, trans-2,2-dimethyl-3-(2,2-dichlorvinyl)-cyclopropan-1-carboxylate(Permethrin) enthält.

6. Insektizides und akarizides Mittel nach Anspruch 1, dadurch gekennzeichnet, daß es als Verbindung der Formel II α-Cyano-3-phenoxybenzyl-α-isopropyl-4-chlorphenyl-acetat(Fenvalerate) enthalt.

7. Verfahren zur Bekämpfung von Insekten und Milben, dadurch gekennzeichnet, daß man insektizide Mittel nach Anspruch 1 auf die Insekten und Milben oder ihren Lebensraum einwirken läßt.

**Claims**

1. An insecticidal and acaricidal agent having a content of at least one imidazole derivative of the formula

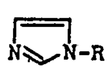

I,

where R denotes linear or branched alkyl of 6 to 14 carbon atoms or allyl, and at least one compound of the formula

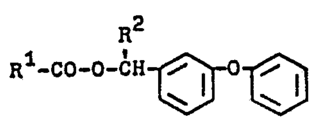

II,

where $R^1$ denotes 2,2-dimethyl-3-(2,2-dihalovinyl)-cyclopropyl, or the radical

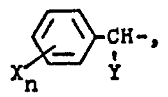

X denoting halogen, n denoting one of the integers 0, 1, 2 and 3, and Y denoting alkyl of 1 to 3 carbon atoms and $R^2$ denotes hydrogen, or cyano.

2. An insecticidal and acaricidal agent as claimed in claim 1, characterized in that the weight ratio of compounds of the formula I to compounds of the formula II is from 1:10 to 10:1.

3. An insecticidal and acaricidal agent as claimed in claim 1, characterized in that the imidazole derivative of the formula I is 1-n-dodecylimidazole.

4. An insecticidal and acaricidal agent as claimed in claim 1, characterized in that the imidazole derivative of the formula I is 1-(1,5,9-trimethyldecyl)-imidazole.

5. An insecticidal and acaricidal agent as claimed in claim 1, characterized in that the compound of the formula II is 3-phenoxy-benzyl-(±)-cis, trans-2,2-dimethyl-3-(2,2-dichlorovinyl)-cyclopropane-1-carboxylate (permethrin).

6. An insecticidal and acaricidal agent as claimed in claim 1, characterized in that the compound of the formula II is $\alpha$-cyano-3-phenoxybenzyl-$\alpha$-isopropyl-4-chlorophenyl acetate (fenvalerate).

7. A process for combating insects and mites, characterized in that the insecticidal and acaricidal agents as claimed in claim 1 are allowed to act on insects or mites, or their habitat.

**Revendications**

1. Agent insecticide et acaricide caractérisé par une teneur en au moins un dérivé d'imidazole de formule

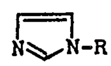

I,

dans laquelle R représente un reste alkyle, non ramifié ou ramifié, à 6 à 14 atomes de carbone ou le reste allyle et au moins un composé de formule

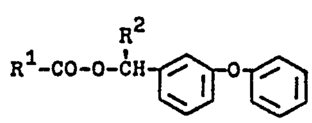

II,

dans laquelle
$R^1$ représente un reste 2,2-diméthyl-3-(2,2-dihalogènevinyl)-cyclopropyle, ou le reste

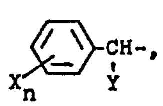

X étant un halogène, *n* étant 0, 1, 2 ou 3 et Y un alkyle à 1 à 3 atomes de carbone, et
$R^2$ l'hydrogène ou un groupe cyano.

2. Agent insecticide ou acaricide selon la revendication 1, caractérisé par le fait que le rapport en poids des composés de formules I et II l'un par rapport à l'autre est de 1/10 à 10/1.

3. Agent insecticide ou acaricide selon la revendication 1, caractérisé par le fait qu'il contient, comme dérivé d'imidazole de formule I, le 1-n-dodécylimidazole.

4. Agent insecticide ou acaricide selon la revendication 1, caractérisé par le fait qu'il contient, comme dérivé d'imidazole de formule I, le 1-(1,5,9-triméthyldécyl)-imidazole.

5. Agent insecticide ou acaricide selon la revendication 1, caractérisé par le fait qu'il contient comme composé de formule II, le 3-phénoxy-benzyl-(±)-cis,trans-2,2-diméthyl-3-(2,2-dichlorovinyl)-cyclopropane-1-carboxylate (Permethrine).

6. Agent insecticide ou acaricide selon la revendication 1, caractérisé par le fait qu'il contient comme composé de formule II, le $\alpha$-cyano-3-phénoxybenzyl-$\alpha$-isopropyl-4-chlorophényl-acétate-(Fenvalérate).

7. Procédé de lutte contre les insectes et les acariens, caractérisé par le fait qu'on fait agir un agent insecticide selon la revendication 1 sur les insectes et les acariens ou sur leur biotope.